(19) Europäisches Patentamt

European Patent Office

Office européen des brevets

(11) Publication number: **0 607 653 A1**

# EUROPEAN PATENT APPLICATION

(21) Application number: **93308044.2**

(22) Date of filing: **08.10.93**

(30) Priority: **18.01.93 JP 21603/93**

(43) Date of publication of application:
**27.07.94 Bulletin 94/30**

(84) Designated Contracting States:
**DE FR**

(51) Int. Cl.⁵: **C01B 33/12**

(71) Applicant: **KAWATETSU MINING COMPANY, LTD.**
**4-1, Shiba-kouen 2-chome**
**Minato-ku**
**Tokyo 105(JP)**

(72) Inventor: **Suzuki, Yoshio**
**15-6-306, 5-chome,**
**Inage-higashi**
**Inage-ku, Chiba-shi, Chiba(JP)**

(74) Representative: **Gaunt, Robert John**
**Stevens, Hewlett & Perkins**
**1 Serjeants' Inn**
**Fleet Street**
**London EC4Y 1LL (GB)**

(54) **Highly dispersible granulated composition of powdered silica and a process for manufacturing thereof.**

㊗ A granulated composition of silica useful for blending with rubbers, synthetic resins and the like which can solve the prior art shortcomings resulting at the time of compounding powdered silica, by granulating the fine silica powder, providing a silica having a property of high dispersibility in the matrix equivalent to that of fine silica powder, is provided.

The granulated composition consisting of powdered silica and having a bulk density in the range of from 0.1 to 0.24 Kg/l and a particle size in the range of from 0.1 to 5 mm can be obtained by granulating fine silica powder blended with a dispersing medium of water, organic solvent, such as methanol or toluene, or a mixture of water and an organic solvent, by using a stirring-type granulating machine and subsequent drying.

The present invention relates to a granulated composition of powdered silica having excellent dispersibility in a material such as paints, synthetic resins and other various materials when the composition is blended with the materials described above and a process for manufacturing thereof.

Powdered silica has been widely used as a reinforcing agent for rubbers, a thickener for paints, a bulking agent for synthetic resins and a compounding agent in the other fields such as paper manufacturing industry and agricultural chemicals.

Normally, silica has been used in the form of fine powder, without processing for the applications described above. However, the silica in the above form, causes the so-called bridging phenomenon by attaching itself to the inner wall of a hopper when a determined quantity of the silica is removed from the hopper for compounding with other components. This phenomenon reduces the working efficiency in compounding procedures since the removal of silica in a determined quantity becomes difficult due to said bridging phenomenon, thus causing a shortcome of unstable quality of the objective product blended. Moreover, the silica in the above form has the problem of causing the deterioration of the working environment since it easily generates dust because of its high volume.

For solving the above problems, attempts have been made to granulate the powdered silica into a granular form beforehand. Normally, for such purpose, a method of granulating the powder using a pelletizer or other compression molding machines is known (see Japanese Patent Laid-Open No. Sho 53-130282). Another method comprising firstly compressing the powder closely by using a press roll to form thin plate bodies and then crushing up said bodies to a desired particle size to obtain the granulated composition is also known (see Japanese Patent Laid-Open No. Hei 4-227676). However, since the granulated composition according to the above two methods requires that the silica be blended with binders and other additives upon granulation, the additives will remain in the granulated composition. Because of such residues, there is a possibility that those additives used for the granulation might react with the synthetic resins or the paints and denature them when the granulated composition was blended to the paints and the resins as a reinforcing agent or a bulking agent. This impose a limitation of use range and the lack of general purpose use, although said composition can at least solve the shortcoming of poor working efficiency in the case of using the powdered silica without granulation. The granulated composition further has a problem of partially causing aggregation in the matrixes, since the dispersibility of the granulated composition in the resins or the paints is lowered compared to the powder due to the reason that the bulk density of the granulated composition typically becomes high after the processing of compression molding.

It is an object of the present invention to provide a granulated composition consisting of powdered silica which improve the shortcomings of both the prior fine silica powder and the prior granulated silica as described above, having excellent dispersibility in the materials to which the granulated composition is blended, enabling reliable removal of a determined quantity thereof, providing good working efficiency upon blending, having a wide range of usages as there are no limitations in the blending partners as the composition is solely consisting of powdered silica, and a process for manufacturing thereof.

The present invention is directed to accomplishing the above purposes, which is a highly dispersible granulated composition of powdered silica consisting of powdered silica and characterized in that the composition has a bulk density in the range of from 0.1 to 0.24 Kg/l and a diameter (particle size) in the range of substantially from about 0.1 to 5 mm.

The granulated composition specified in the present invention can be blended with the objective materials without concern as to the properties of the matrixes, since it neither contains binders nor other additives at all, in contrast to the prior granulated compositions.

In the case of granulated compositions, when it is blended into a synthetic resin or a paint, the dispersibility in the matrix deteriorates if the bulk density of said composition exceeds 0.24 Kg/l and the fluidity deteriorates if the bulk density of said composition is less than 0.1 Kg/l, in which ranges, the reliable removal of a determined quantity becomes difficult. Even though the bulk density is in the above range, the composition having a diameter of less than 0.1 mm does not provide sufficient fluidity, thus making its handling difficult, whereas the composition having a diameter exceeding 5 mm makes dispersion in the matrix insufficient. Therefore, it is essential that the bulk density and the diameter of said composition be in the range as described above.

The highly dispersible granulated composition specified in the present invention can be obtained by adding any of water, an organic solvent or their mixture for a dispersing medium to the powdered silica, granulating the resulting mixture by using a stirring-type granulating machine or a disc pelletizer and subsequent drying. It is preferable to use a stirring-type granulating machine as it can work in a shorter time than using a disc pelletizer.

2

Either of silica anhydride or silica hydrate of which particle diameter is 100 $\mu$m or less can be used for the raw material powdered silica. Ultrafine particle of silica having a particle diameter of about 20 nm can be used as well.

Surface reformed hydrophobic silica, that is, the powdered silica of which surface has been treated, for example, by coating with methyl groups in order to improve the adhesivity thereof when the powdered silica is blended into the synthetic resins and the like, or by coating with silicon oil, silane coupling agent and the like, may be used.

In the present invention, water is used for a dispersing medium, however, an organic solvent or the mixture of water and an organic solvent can be used as well. An organic solvent is the one which can be removed by drying and does not remain in the granulated composition. For example, methanol, ethanol, diethyl ether, benzene and toluene can be exemplified for such solvent. By using the solvent having lower boiling point than that of water, the cost for drying process can be lowered. If using hydrophobic silica, it is preferable to use an organic solvent or a mixture of water and an organic solvent.

The mixing ratio of water and the organic solvent will be determined based on the general evaluation on each points of ensuring of granulation property, lowering the cost for drying, lowering the cost for the organic solvent, dispersibility into the matrixes and others. In the dispersing medium used during the granulation, none of the binders such as PVA, granulation accelerators and other additives such as surface active agents are contained at all. Thus the granulated composition obtained solely consists of the raw material powdered silica. The organic solvent used can be recovered for reuse after using for the granulation.

It is preferable that the dispersibility index of the granulated composition of the present invention be 100 g/granule or less.

In the present invention, the term "dispersibility index" described above is represented by a unit of g/granule and is calculated according to the following procedure, which is, collecting 12 spherical granules having the diameter in the range of from 4.75 to 4.00 mm by sieving the granulated composition manufactured, placing each spherical granules on a plate scale and gradually applying a load onto the spherical granule by using a bar with a flat bottom for reading the load (g) at the moment that the granule is destroyed or collapsed, from the plate scale. This procedure is carried out for each of 12 granules, then calculate the mean value from the 10 granules (n = 10) by eliminating both maximum and minimum load values obtained.

When comparing methanol with water which are the liquid which can be used for the dispersing medium during the granulation, the dispersibility index of the granulated composition is smaller in the use of the former and greater in the use of the later. In the comparison between toluene and methanol, the dispersibility index obtained in both cases showed approximately equivalent value, thus the granulated composition having smaller dispersibility index can be obtained when the organic solvents are used as the dispersing medium comparing to the use of water.

As described above, the granulated composition of the present invention is formed in granular shape, being of low bulk density, having high dispersibility in the matrix which is equivalent to the dispersibilty obtained when used in powder form and good fluidity. Because of these advantageous properties, the granulated composition of the present invention does not cause dusting as seen in the case of powdered silica, which leads to improvement of the working environment, facilitating the handling thereof, enabling the reliable removal of a determined quantity of silica which further leads to improve the quantitative dispersion at blending, stabilizing the quality of the matrix, improving the production capacity of the product to which the granulated composition of the present invention is used. Moreover, since the granulated composition of the present invention neither contains binders nor other additives at all in contrast to the prior granulated composition, the composition can be blended without investigation of the property of the matrixes, enabling an extremely wide range of use.

Examples

Examples 1 to 4

Two Kg of commercially available ultrafine anhydrous silica of which primary particle size was 20 nm was used as a raw material, being put into a stirring-type granulating machine (Henshell mixer, 20 l capacity) together with each of 4 kinds of dispersing media consisting of water, methanol, toluene and a mixture of water and methanol (mixing ratio 1:1), respectively, of which doses to be added are represented in Table 1. The resulting suspension was stirred for 5 min. at from 2150 to 2250 rpm to complete the granulation. Then the granulated composition was spread in a thin layer with a thickness of 10 mm on the stainless vat of a hot air circulating drier (250 l capacity) and dried for a period of from 8 to 10 hours under the flow of $N_2$ purge gas, affording spherical granules.

Comparative Example 1

To the ultrafine anhydrous silica identical to the raw material described above was added to water at the rate of 1000 ml to 1 Kg of the silica, and the resulting mixture was stirred thoroughly by using a universal mixer for 10 min. Then the mixture was supplied at the rate of 50 Kg/hr to the space of a double-roll granulating machine (diameter of roll of 160 mm) which rotates toward the opposite direction at 10 rpm, affording a cake molded in a plate shape under the pressure of from 0.5 to 1 $t/cm^2$. The cake obtained was then destroyed up to the size of 5 mm or less and dried by using hot air circulating drier for preparing granules, afforded the granulated composition.

The physical properties and the dispersibility in the matrixes of both the granulated composition and the powdered silica described in Examples 1 to 4 and Comparative Example 1 respectively, were as shown in Table 1.

The evaluation of the dispersibility in the matrix was conducted according to the following procedure. Namely, each granulated composition was mixed to the matrix (polypropyrene resin pellets) so as to comprise 30% by weight of the mixture, then a compound was prepared using a biaxial extruding machine. The compound was further prepared to a film having a thickness of 50 ± 10 $\mu$m by using hot press, then photographed by soft X-ray apparatus and the existence of the aggregation of ultrafine silica was observed under a microscope with a magnification of 100. The granulated composition or the powdered silica resulting in no aggregation was evaluated as good, whereas the one resulting in an aggregation was evaluated as bad. The maximum diameter of the aggregation which appeared in bad examples was about 50 $\mu$m.

As can be seen from the results shown in Table 1, it is understandable that the granulated composition specified in the present invention has an improved bulk density comparing to that of prior granulated compositions together with the additional advantages of lowered angle of repose, excellent fluidity, easy of handling, fairly good working efficiency and good dispersibility in the matrix.

Furthermore, the results of said dispersibility in the matrix evaluated by determining the bulk density and the dispersibility index in the other examples and comparative examples are shown in Table 2.

Examples 5 and 6

To 5 Kg of ultrafine anhydrous silica identical to the raw material described above was added the dispersing media at the rates shown in Table 2, respectively, and the resulting mixtures were mixed thoroughly for 10 min. by using a universal mixer. The mixtures were then once put into the disc pelletizer having a diameter of 1 m and a depth of 250 mm to granulate at 23 rpm for a period of from 10 to 16 min. The granulated compositions were dried by using a hot air circulating drier.

Comparative Examples 2 and 3

The granulated compositions were obtained according to the procedure identical to that of Comparative Example 1 except to change the kind of the dispersing medium and the quantity added.

Comparative Examples 4 and 5

The spherical granulated compositions were obtained according to the procedure identical to that of Example 1 except to add 0.5% PVA solution in water and 1.0% PVA solution in water at the rate indicated in Table 2 for the dispersing medium.

Comparative Examples 6 and 7

The granulated compositions were obtained according to the procedure identical to those of Comparative Example 5 and 6 except to change the kind of the dispersing medium and the quantity added.

Comparative Examples 8 to 10

To 1 Kg of the ultra fine anhydrous silica identical to the raw material described above was added to the dispersing media at the rate as shown in Table 2, respectively, and the resulting mixtures were mixed thoroughly for 10 min. by using universal mixer. The mixtures were then supplied to a Briket machine having a diameter of 250 mm at a feed speed of 50 Kg/hr (7.5 rpm, pressure at molding of 0.5 to 1 t/cm$^2$), affording the spherical granulated composition. The granulated compositions were dried by using a hot air circulating drier.

As can be seen from Table 2, the granulated compositions obtained in the above Examples showed a dispersibility index of 100 g/granule or less, thus good results were obtained.

As to comparative Examples 4, 5 and 7 where PVA was added thereto, respectively, each comparative Example showed a dispersibility index exceeding 100 g/granule even though the bulk density thereof was 0.24 Kg/l or less, affording the lowering of the dispersibility in the matrix.

From the results described above, it can be concluded that the bulk density of the granulated composition be preferably in the range of from 0.1 to 0. 24 Kg and the dispersibility index thereof be preferably 100 g/granule or less.

Table 1

| | | Example 1 | Example 2 | Example 3 | Example 4 | Comparative Example1 | Powder |
|---|---|---|---|---|---|---|---|
| Solution (Amount added :ml)*1 | | water (1200) | methanol (1200) | toluene (1100) | water: methanol 1:1(1200) | water (1000) | - |
| Particle Size (wt%) | 5~2.5(mm) | 23 | 19 | 21 | 23 | 26 | - |
| | 2.5~1.2 | 29 | 25 | 28 | 24 | 24 | |
| | 1.2~0.6 | 30 | 34 | 35 | 31 | 22 | |
| | 0.6~0.15 | 14 | 17 | 13 | 17 | 19 | |
| | less 0.15 | 4 | 5 | 3 | 5 | 9 | |
| Bulk Density(Kg/l) | | 0.16 | 0.15 | 0.16 | 0.18 | 0.32 | 0.05 |
| Dispersibility Index (g/granule) | | 71 | 23 | 34 | 51 | -*2) | - |
| Angle of repose(°) | | 38 | 39 | 38 | 37 | 38 | 54 |
| Fluiding time (sec)*3 | | 0.9 | 1.1 | 0.9 | 1.2 | 1.4 | blocked |
| Aggregation in matrix | | None | None | None | None | Observed | None |

Remarks:
*1) : Amount added per 1 Kg of powder.
*2) : The dispersibility index of the granulated composition manufactured by using double-roll granulating machine could not be measured as the form of the composition became flat.
*3) : Time required for discharging whole granulated composition following to filling up the granulated composition into the corn-shaped chute ( $\phi84\times\phi35\times$h78 mm).

【Table 2 】

| | No | Type of Granulating Machine | Solvent | | Time for Granulation (min) | Physical Property of Granulated Composition | | Dispersibility in Matrix |
|---|---|---|---|---|---|---|---|---|
| | | | Type | Amount Added (ml) *5) | | Bulk Density (Kg/l) | Dispersibility Index (g/granule) | |
| E x a m p l e s | 1 | Henshell Mixer | Water | 1200 | 5 | 0.16 | 71 | Good |
| | 2 | | Methanol | 1200 | 5 | 0.15 | 23 | Good |
| | 3 | | Toluene | 1100 | 5 | 0.16 | 34 | Good |
| | 4 | | $H_2O$:MeOH(1:1) | 1200 | 5 | 0.18 | 51 | Good |
| | 5 | Disc Pelletizer | Water | 950 | 10 | 0.22 | 95 | Good |
| | 6 | | Methanol | 900 | 14 | 0.23 | 40 | Good |
| C o m p a r a t i v e | 1 | Double-roll | Water | 1000 | 3 | 0.32 | ———— | Bad |
| | 2 | | Methanol | 950 | 3 | 0.31 | ———— | Bad |
| e x a m p l e s | 3 | | Toluene | 1000 | 3 | 0.35 | ———— | Bad |
| | 4 | Henshell Mixer | 0.5% PVA | 1000 | 5 | 0.18 | 108 | Bad |
| | 5 | | 1.0% PVA | 980 | 5 | 0.20 | 141 | Bad |
| | 6 | Disc Pelletizer | $H_2O$:MeOH(1:1) | 950 | 16 | 0.26 | 71 | Bad |
| | 7 | | 0.5% PVA | 870 | 13 | 0.24 | 115 | Bad |
| | 8 | Briket Machine | Water | 850 | 3 | 0.39 | 150 | Bad |
| | 9 | | Methanol | 750 | 3 | 0.38 | 113 | Bad |
| | 10 | | Toluene | 800 | 3 | 0.37 | 123 | Bad |

Remarks : *5) : Amount added per 1 Kg of powder.

## Claims

1. A granulated composition of powdered silica consisting of powdered silica having a bulk density in the range from 0.1 to 0.24 Kg/l and a granule diameter in the range substantially from about 0.1 to 5 mm.

2. A granulated composition according to claim 1 having a dispersibility index of 100 g/granule or less.

3. A process for manufacturing a granulated composition of powdered silica comprising:
   a) adding a dispersing media selected from the group consisting of water, organic solvent and mixture of water and organic solvent to powdered silica,
   b) mixing the silica and said dispersing media to form a mixture and for a sufficient period of time to achieve granulation of said silica, and
   c) drying said mixture,
   whereby said granulated composition has a bulk density in the range from 0.1 to 0.24 Kg/l.

4. A process according to claim 3 wherein said powdered silica is selected from the group consisting of silica anhydride, silica hydrate, ultrafine particle of silica and surface reformed hydrophobic silica.

5. A process according to claim 3 wherein said powdered silica has a particle diameter 100 $\mu$m or less.

6. A process according to claim 3 wherein said organic solvent is selected from the group consisting of methanol, ethanol, diethyl ether, benzene and toluene.

7. A process according to claim 3 wherein said organic solvent has a boiling point lower than water.

8. A process according to claim 3 wherein said mixing is accomplished using a stirring-type granulating machine or a disc pelletizer.

9. A process according to claim 3 wherein said drying is continued for a period of time sufficient to completely remove said dispersing media.

10. A process according to claim 3 whereby said granulated composition has a dispersibility index of 100 g/granule or less.

11. A process according to claim 3 whereby said granulated composition has a granule diameter in the range substantially from about 0.1 to 5 mm.

12. A granulated composition of powdered silica consisting of powdered silica having a bulk density in the range from 0.1 to 0.24 Kg/l and a granule diameter in the range substantially from about 0.1 to 5 mm, made by adding a dispersing media selected from the group consisting of water, organic solvent and mixture of water and organic solvent to powdered silica, mixing the silica and said dispersing media to form a mixture and for a sufficient period of time to achieve granulation of said silica, and drying said mixture.

13. A composition according to claim 12 wherein said powdered silica is selected from the group consisting of silica anhydride, silica hydrate, ultrafine particle of silica and surface reformed hydrophobic silica.

14. A composition according to claim 12 wherein said powdered silica has a particle diameter 100 $\mu$m or less.

15. A composition according to claim 12 wherein said organic solvent is selected from the group consisting of methanol, ethanol, diethyl ether, benzene and toluene.

16. A composition according to claim 12 wherein said mixing is accomplished using a stirring-type granulating machine or a disc pelletizer.

17. A composition according to claim 12 whereby said granulated composition has a dispersibility index of 100 g/granule or less.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | GB-A-1 200 686 (PRODUITS CHIMIQUES PECHINEY-SAINT-GOBAIN) * claims 1-4; examples 1-6 * | 1,3 | C01B33/12 |
| X | DE-B-15 67 440 (DEUTSCHE GOLD-UND-SILBER-SCHEIDEANSTALT) * claims 1,3 * | 1,3 | |
| A | EP-A-0 352 027 (INTERNATIONAL MINERALS & CHEMICAL CORPORATION) * claim 1 * | 1,3 | |

TECHNICAL FIELDS
SEARCHED       (Int.Cl.5)

C01B

The present search report has been drawn up for all claims

| Place of search | Date of completion of the search | Examiner |
|---|---|---|
| BERLIN | 29 April 1994 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)